# EUROPÄISCHE PATENTANMELDUNG

(11) **EP 1 136 163 A2**
(43) Veröffentlichungstag der Anmeldung: **26.09.2001**
(21) Anmeldenummer: 01107259.2
(22) Anmeldetag: 23.03.2001
(51) Int. Cl.: B23D 45/10

(54) **Kreissägemaschine mit eine Vorritzeinrichtung**

(30) Priorität: 23.03.2000 DE 20005348 U
(71) Anmelder: Ant. Panhans GmbH, Werkzeug- u. Maschinenfabrik, 72488 Sigmaringen (DE)
(72) Erfinder: Rollbühler, Werner, 72511 Bingen (DE)
(74) Vertreter: Eder, Eugen, Dipl.-Ing.

(57) **Zusammenfassung**

Die Erfindung betrifft eine Kreissägemaschine (1), mit einem Kreissägeblatt (3), einem Maschinentisch (25), einer Werkstückauflage (5), einem Spaltkeil (6) und einer dem Kreissägeblatt (3) vorgelagerten Vorritzeinrichtung (21), bestehend aus einem Vorritzsägeblatt (15) mit horizontalen und/oder vertikalen Verstellmechanismen (18, 20), wobei die Vorritzeinrichtung (21) mit dem Vorritzsägeblatt (15) und den Verstellmechanismen (18, 20) aus einer Arbeitsposition (A) in eine Parkposition (P) und umgekehrt überführbar ist.

## Beschreibung

Die Erfindung bezieht sich auf eine Kreissägemaschine mit einem Kreissägeblatt, einem Maschinentisch, einer Werkstückauflage, einem Spaltkeil und einer dem Kreissägeblatt vorgelagerten Vorritzeinrichtung, bestehend aus einem Vorritzsägeblatt mit horizontalen und/oder vertikalen Verstellmechanismen.

Kreissägemaschinen dienen zum Durchtrennen und/oder Einschneiden eines Werkstückes mittels eines Kreissägewerkzeuges. Hierbei wird der Schneidvorgang üblicherweise im Gegenlaufverfahren durchgeführt. Aus Sicherheitsgründen ist unmittelbar hinter dem Kreissägeblatt ein sog. Spaltkeil angebracht, welcher verhindern soll, dass sich die Schnittfuge nicht mehr wesentlich in ihrer Breite verringern kann.

Bei Werkstücken mit empfindlicher Oberfläche (z. B. lackiert oder beschichtet) besteht die Gefahr, dass die austretenden Zähne des Kreissägeblattes oder mitgerissene Werkstückpartikel Schnittkanten an der Werkstückauflageseite beschädigen. Dieser Gefahr begegnet man durch die vorauseilende Einbringung einer 0,5 bis ca. 2mm tiefen Nut durch eine Vorritzeinrichtung mit einem Vorritzsägeblatt in sehr genauer Übereinstimmung der Flucht und Schnittfugenbreite mit der Kreissäge. Diese Vorritzeinrichtung ist demnach in Werkstückvorschubrichtung dem Kreissägeblatt vorgelagert und nutet das Werkstück im Gleichlaufverfahren ein.

Zum allgemein bekannten Stand der Technik zählen Kreissägemaschinen, bei denen dem Kreissägeblatt die Vorritzeinrichtung entgegen der Werkstückvorschubrichtung in definiertem Abstand vorgelagert ist. Im Allgemeinen wird bei derartigen Maschinen die maximal einsetzbare Größe des Kreissägeblattes durch einen vorbestimmten Abstand definiert. Dieser Abstand, vermindert um den Radius der Werkzeugaufnahme des Vorritzsägeblattes ergibt den maximalen Radius des Kreissägeblattes. Da dieses von unten und durch den Maschinentisch zum Sägen mehr oder weniger hindurchtritt, hat dieser maximale Werkzeugradius des Kreissägeblattes wesentlichen Einfluss auf die maximale Schnitthöhe.

Nachteilig ist bei diesen bekannten Konstruktionen eine zusätzliche Durchmesserbeschränkung des für die Maschine zulässigen größten Kreissägeblattes durch das Vorritzsägeblatt, solange letzteres nicht entfernt ist, da ansonsten Kollisionsgefahr zwischen den beiden Sägeblättern besteht.

Entsprechend liegt der vorliegenden Erfindung die Aufgabe zugrunde, eine Konstruktion zu schaffen, bei welcher auf einfache Weise eine Kollision zwischen den beiden vorgenannten Sägeblättern vermieden und trotzdem die Verwendung von größtmöglichen, in die Maschine einsetzbaren Kreissägeblättern gewährleistet ist.

Diese Aufgabe wird erfindungsgemäß dadurch gelöst, dass die Vorritzeinrichtung mit dem Vorritzsägeblatt und den Verstellmechanismen aus ihrer Arbeitsposition in eine Parkposition und umgekehrt überführbar ist. Hierbei kann die Vorritzeinrichtung unter den Maschinentisch und quer dazu in eine Endposition als Parkposition verfahrbar sein. Durch diese Verstellmöglichkeit ergibt sich damit der Vorteil, dass eine Kollisionsgefahr zwischen dem Kreissägeblatt und dem Vorritzsägeblatt auf effektive Weise vermieden wird, wobei nach Verfahren der Vorritzeinrichtung in die Arbeitsposition sofort das Vorritzsägeblatt einsatzbereit ist.

In weiterer Ausgestaltung der Erfindung kann die Vorritzeinrichtung getrennt vom Maschinentisch eine eigene Lagerung aufweisen und über mindestens einen Schlitten gegenüber dem Kreissägeblatt quer zu dessen Schnittrichtung horizontal und/oder vertikal zwischen der Arbeitsposition und der Parkposition verfahrbar sein. Hierbei kann die Vorritzeinrichtung durch die Verstellmechanismen bewegbar sein. Die Verstellmechanismen ihrerseits können durch an sich bekannte Positionsermittlungselemente gesteuert werden. Durch diese Positionsermittlungselemente sind die Abmessungen des Kreissägeblattes und die Position des Spaltkeils ermittelbar und über die Verstellmechanismen die Vorritzeinrichtung zwischen der Arbeitsposition und der Parkposition bewegbar.

Vorteilhafte Weiterbildungen ergeben sich aus den weiteren Unteransprüchen.

Die Erfindung wird nachfolgend anhand eines in der Zeichnung dargestellten Ausführungsbeispiels näher beschrieben. In der Zeichnung zeigen:
- Fig. 1: eine schematische Seitenansicht der Kreissägemaschine mit Kreissägeblatt und Vorritzeinrichtung;
- Fig. 2: eine Draufsicht auf die Anordnung nach Fig. 1 in schematischer Darstellung;
- Fig. 3: eine Ansicht eines Werkstückes in schematischer Darstellung in Seitenansicht, Draufsicht und Vorderansicht.

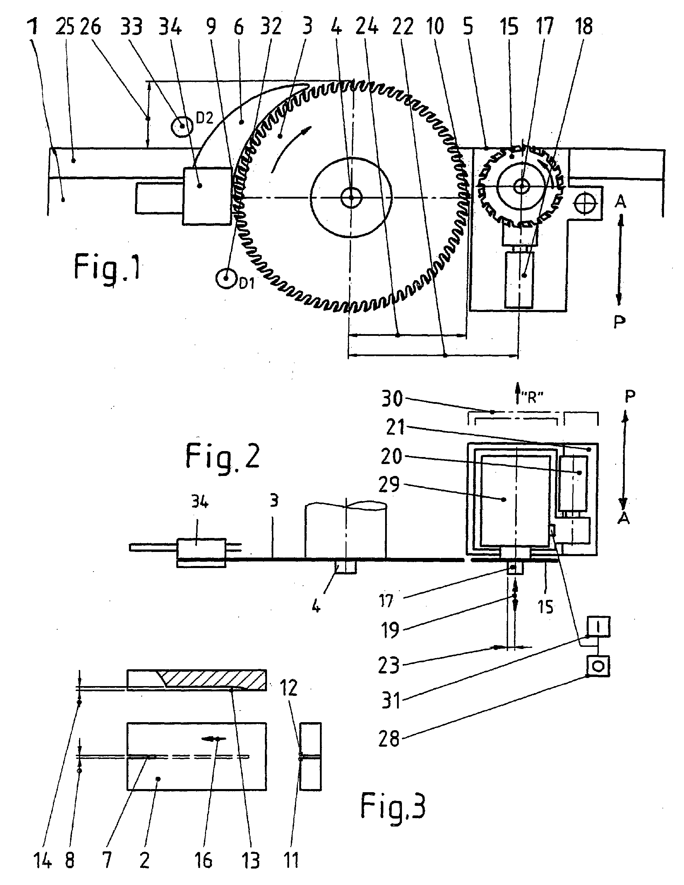

In den Fig. 1 und 2 ist eine Kreissägemaschine 1 dargestellt, welche dem Durchtrennen oder Einschneiden eines in Fig. 3 gezeigten Werkstückes 2 dient, und zwar mit Hilfe eines Kreissägeblattes 3. Der Schneidvorgang wird üblicherweise im Gegenlaufverfahren durchgeführt, wobei sich eine Rotationsachse 4 des Sägeblattes 3 unterhalb einer Werkstückauflage 5 der Maschine befindet.

Aus Sicherheitsgründen ist unmittelbar hinter dem Kreissägeblatt 2 ein sog. Spaltkeil 6 angebracht. Dieser soll verhindern, dass sich die in Fig. 3 dargestellte Schnittfuge 7 nicht mehr wesentlich in ihrer Breite 8 verringern kann. Aufsteigende Zähne 9 des Kreissägeblattes 3 können somit am Werkstück 2 keinen gefährlichen Rückschlag erzeugen.

Bei Werkstücken mit empfindlicher Oberfläche (z. B. lackiert oder beschichtet) besteht die Gefahr, dass die austretenden Zähne 10 des Kreissägeblattes 3 oder mitgerissene Werkstückpartikel die Schnittkanten 11 und 12 gemäß Fig. 3 an der Werkstückauflageseite 13 beschädigen.

Dieser Gefahr begegnet man durch das vorauseilende Einbringen einer Nut 14, beispielsweise mit einer Tiefe von 0,5 bis 2mm, durch eine Vorritzeinrichtung 21 mit Vorritzsägeblatt 15. Das Vorritzsägeblatt 15 liegt in sehr genauer Übereinstimmung der Flucht und Schnittfugenbreite mit dem Kreissägeblatt 3. Das Vorritzsägeblatt 15 ist in Werkstückvorschubrichtung 16 dem Kreissägeblatt 3 vorgelagert und nutet das Werkstück 2 im Gleichlaufverfahren ein.

Die Rotationsachse 17 des Vorritzsägeblattes 15 befindet sich unterhalb der Werkstückauflage 5 der Maschine 1. Indem das Vorritzsägeblatt 15 mehr oder weniger über die Werkstückauflage 5 hinausragt, wird die Tiefe der Vorritznut 14 im Werkstück 2 beeinflusst. Dies geschieht entweder über manuell bedienbare oder kraftbetriebene Verstellmechanismen 18.

Zur genauen Anpassung der Flucht der Schnittfugen von Kreissägeblatt 3 und Vorritzsägeblatt 15 kann letzteres um eine geringe Wegstrecke in beiden Richtungen ihrer Werkzeugachse 19 verstellt werden. Der hierfür notwendige Verstellmechanismus 20 wird entweder manuell oder durch einen anderweitigen Antrieb betätigt.

Wie ersichtlich, ist dem Kreissägeblatt die Vorritzeinrichtung 21 entgegen der Werkstückvorschubrichtung 16 in definiertem Abstand 22 vorgelagert. Im Allgemeinen wird hierbei die maximale einsetzbare Größe des Kreissägeblattes 3 entsprechend dem maximalen Werkzeugdurchmesser durch den vorgenannten Abstand 22 bestimmt. Dieser Abstand 22, vermindert um den Radius der Werkzeugaufnahme 23 des Vorritzsägeblattes 15, ergibt den maximalen Radius 24 des Kreissägeblattes 3. Da dieses von unten durch den Maschinentisch 25 zum Sägen mehr oder weniger hindurchtritt, hat dieser maximale Werkzeugradius 24 wesentlichen Einfluss auf die maximale Schnitthöhe 26.

Erfindungsgemäß wird die gesamte Vorritzeinrichtung 21 bei jeder Außerbetriebnahme 28 des Vorritzsägeantriebs 29 aus einer Arbeitsposition A in eine Parkposition P verfahren. Diese Bewegung erfolgt so weit unter dem Maschinentisch 25 und dann so weit in Achsrichtung R, dass in dieser Endposition 30, d.h. der Parkposition P eine Kollision zwischen dem Kreissägeblatt 3 und dem Vorritzsägeblatt 15 unmöglich ist. Das Bewegen des Vorritzsägeblattes 15, zusammen mit der Vorritzeinrichtung 21 aus der Arbeitsposition A in die Parkposition P und umgekehrt erfolgt über die Stellmittel 18 und 20, welche vorzugsweise als elektromotorische Antriebe ausgebildet sind.

Bei Betätigung eines Schalters 31 für das Vorritzsägeblatt 15 wird über Positionsermittlungselemente 32 und 33, welche als Detektoren D1 und D2 ausgebildet sind, eine kollisionsrelevante Abmessung des Kreissägeblattes 3 bzw. die damit in Zusammenhang stehende Position des Spaltkeils und/oder dessen maschinenseitigen Adapters 34 ermittelt und - falls zutreffend - die Position des Vorritzsägeblattes 15 in Arbeitsstellung A erst gar nicht gestartet.

Somit kann durch Verwendung des größtmöglichen, in die Maschine 1 einsetzbaren Kreissägeblattes 3 die maximale Schnitthöhe 26 erzielt werden, ohne dass das Vorritzsägeblatt 15 zuvor entfernt werden muss.

Durch die Vorrichtung wird mit einfachen Mitteln ermöglicht, dass die Vorritzeinrichtung 21 mit dem Vorritzsägeblatt 15 aus der Arbeitsposition A in die Parkposition P und umgekehrt verfahren werden kann, so dass die Nachteile der vorbekannten, zum Stand der Technik zählenden Konstruktionen damit behoben sind.

## Patentansprüche

1. Kreissägemaschine (1), mit einem Kreissägeblatt (3), einem Maschinentisch (25), einer Werkstückauflage (5), einem Spaltkeil (6) und einer dem Kreissägeblatt (3) vorgelagerten Vorritzeinrichtung (21), bestehend aus einem Vorritzsägeblatt (15) mit horizontalen und/oder vertikalen Verstellmechanismen (18, 20), **dadurch gekennzeichnet, dass** die Vorritzeinrichtung (21) mit dem Vorritzsägeblatt (15) und den Verstellmechanismen (18, 20) aus einer Arbeitsposition (A) in eine Parkposition (P) und umgekehrt überführbar ist.

2. Maschine nach Anspruch 1, **dadurch gekennzeichnet, dass** die Vorritzeinrichtung (21) unter den Maschinentisch (25) und quer dazu in eine Endposition (30) als Parkposition (P) und umgekehrt verfahrbar ist.

3. Maschine nach einem oder mehreren der vorhergehenden Ansprüche, **dadurch gekennzeichnet, dass** die Vorritzeinrichtung (21) getrennt vom Maschinentisch (25) eine eigene Lagerung aufweist und über mindestens einen Schlitten gegenüber dem Kreissägeblatt (3) quer zu dessen Schnittrichtung horizontal und/oder vertikal zwischen der Arbeitsposition (A) und der Parkposition (P) verfahrbar ist.

4. Maschine nach einem oder mehreren der vorhergehenden Ansprüche, **dadurch gekennzeichnet, dass** durch die Verstellmechanismen (18, 20) die Vorritzeinrichtung (21) bewegbar ist.

5. Maschine nach Anspruch 4, **dadurch gekennzeichnet, dass** die Verstellmechanismen (18, 20) über mindestens ein Positonsermittlungselement (32, 33) steuerbar sind.

6. Maschine nach Anspruch 5, **dadurch gekennzeichnet, dass** durch die Positionsermittlungselemente (32, 33) die Abmessungen des Kreissägeblattes (3) und die Position des Spaltkreises (6) ermittelbar und über die Verstellmechanismen (18, 20) die Vorritzeinrichtung (21) zwischen der Arbeitsposition (A) und der Parkposition (P) bewegbar sind.

7. Maschine nach Anspruch 4 und 5, **dadurch gekennzeichnet, dass** die Positionsermittlungselemente (32, 33) als Detektoren (D₁, D₂) ausgebildet sind.

8. Maschine nach einem oder mehreren der vorhergehenden Ansprüche, **dadurch gekennzeichnet, dass** die Verstellmechanismen (18, 20) als elektromotorische Antriebe ausgebildet sind.
